# EUROPÄISCHE PATENTSCHRIFT

(11) **EP 3 526 381 B1**
(45) Veröffentlichungstag und Bekanntmachung des Hinweises auf die Patenterteilung: **30.11.2022**
(21) Anmeldenummer: 17793845.3
(22) Anmeldetag: 11.10.2017
(51) Int. Cl.: D04H 1/4326, D04H 1/56, D04H 3/16, D04H 3/009

(54) **EMISSIONSARME MELAMINFORMALDEHYD-VLIESE UND -VLIESSTOFFE**
LOW-EMISSION MELAMINE FORMALDEHYDE NONWOVENS AND NONWOVEN MATERIALS
NON-TISSÉS OU TISSUS NON-TISSÉS À BASE DE MÉLAMINE-FORMALDÉHYDE À FAIBLE ÉMISSION

(30) Priorität: 11.10.2016 DE 102016012034
(43) Veröffentlichungstag der Anmeldung: 21.08.2019
(73) Patentinhaber: OSTTHÜRINGISCHE MATERIALPRÜFGESELLSCHAFT FÜR TEXTIL UND KUNSTSTOFFE MBH, 07407 Rudolfstadt (DE)
(72) Erfinder: KINDLER, Christoph, 07318 Saalfeld (DE); EWERT, Yvonne, 07407 Rudolstadt (DE)
(74) Vertreter: Plate, Jürgen
(86) Internationale Anmeldenummer: PCT/EP2017/075949
(87) Internationale Veröffentlichungsnummer: WO 2018/069398

(56) Entgegenhaltungen:
- WO-A1-2006/100041
- WO-A1-2009/050128
- WO-A1-2015/155245

## Beschreibung

Die vorliegende Erfindung betrifft hitze- und flammfeste textile Vliese oder Vliesstoffe, deren Fasern/Flocken aus Duromeren auf Melaminformaldehydbasis bestehen. Sie sind geeignet als thermischer Isolator und als akustisches Dämmmaterial und zeichnen sich durch ein niedriges und für diesen Materialtyp untypisches Emissionsverhalten von flüchtigen organischen Verbindungen, insbesondere Formaldehyd, aus. Die emissionsarmen Melamin/Formaldehyd-Vliese und - Vliesstoffe unterschreiten die Grenzwerte bezüglich Formaldehydemissionen deutlich.

Die Herstellung von Melaminharz-Vliesen nach dem Melt-Blow-Verfahren ist in der WO 2006/100041 A1 im Unteranspruch 29 allgemein beansprucht.

Bei dem Melt-Blow-Verfahren werden durch gemeinsam mit der Schmelze aus einer Düse austretende heiße Luft die erzeugten Filamente gelängt und zu besonders feinen endlichen Fasern ausgesponnen. Nach der Ablage dieser Fasern zu einem Wirrlagenverbund wird das entstandene Spinnvlies mit gasförmigen HCl vorgehärtet und anschließend bei hohen Temperaturen zur vollständigen Härtungsreaktion gebracht.

Feinstfaservliese aus faserigen Flockengebilden aus glasartig erstarrten, reaktiven und zur Polymerbildung befähigten niedermolekularen Harzschmelzen sind in der WO 2013/152858 A1 beschrieben. Dabei beträgt der Durchmesser der einzelnen Fasern weniger als 5 µm.

In der WO 2014/080003 ist ein Melamin/Formaldehyd-Schaumstoff mit partikelförmigem Füllmaterial und reduzierten Formaldehydwerten (bestimmt nach DIN 55666) beschrieben.

Gegenstand der WO 2009/050128 A1 ist ein thermoplastisch verarbeitbares Aminoplast-Harz, aus dem sich duroplastische Feinstfaservliese herstellen lassen. Das Aminoplast-Harz wird in einem zweistufigen Verfahren hergestellt. In der ersten Stufe wird eine Triazin-Verbindung mit einem Aldehyd und einem Alkohol umgesetzt. Die Triazin-Verbindung ist dabei bevorzugt Melamin, der Aldehyd ist bevorzugt Formaldehyd und der Alkohol ist bevorzugt Methanol, Butanol, Hexanol, Butandiol oder Trimethylolpropan. In einer zweiten Stufe werden überschüssiger Alkohol und Wasser bei Temperaturen von 80 bis 150 °C entfernt.

In der WO 2006/100041 A1 ist ein Verfahren zur Herstellung von duroplastischen Feinstfaservliesen mit Flammschutzwirkung offenbart. Als Ausgangsmaterialien dienen reaktive, vernetzbare, nicht-lineare Präpolymere, die aus mit Alkoholen veretherten Melamin/Formaldehyd-Harzen bestehen. Die Vernetzung kann durch gasförmiges HCl katalysiert werden. Das Feinstfaservlies kann darüber hinaus durch eine thermische Nachbehandlung bei 250 bis 280 °C nachgehärtet werden. Dabei wird die Temperatur langsam von 60 auf 280 °C erhöht.

EP 2 616 505 B1 beschreibt ein Verfahren zur Herstellung eines Melamin/Formaldehyd-Schaumstoffes mit verbesserter Hydrolysestabilität. Dies führt zu geringen Formaldehydemissionen bei erhöhter Temperatur und Feuchtigkeit. Hier werden durch Tempern und Durchströmen mittels Heißluft folgende Formaldehyd-Emissionswerte erreicht:
< 150 mg/kg nach VDA 275
< 40 mg/kg nach DIN EN ISO 14184-1
< 0,03 mg/kg nach DIN 717-1

Bisher ist kein duromeres Material auf Formaldehydbasis bekannt, das die Anforderungen der Automobilindustrie für das Interieur erfüllt. Dies erfordert nach VDA 275 Formaldehyd-Werte unter 10 mg/kg.

Ziel der vorliegenden Erfindung war es, ein textiles Flächengebilde zu entwickeln, dessen Fasern im Wesentlichen, d.h. zu 70 bis 100 Gew.-%, aus Duromeren auf Melamin/Formaldehyd-Basis bestehen. Dieses textile Flächengebilde soll die Anforderungen der Automobilindustrie für das Interieur bezüglich Formaldehydemissionen erfüllen und die derzeit gültigen Grenzwerte deutlich unterschreiten um auch bei möglichen zukünftigen Verschärfungen der Grenzwerte in diesem Bereich einsatztauglich zu sein.

Die vorliegende Erfindung betrifft ein Verfahren zur Herstellung von hitze- und flammfesten, emissionarmen Vliesen oder Vliesstoffen auf Melamin/Formaldehydbasis, sowie Hitze- und flammfeste Vliese oder Vliesstoffe auf Melamin/Formaldehydbasis erhältlich nach diesem Verfahren, und deren Verwendung als thermischer Isolator oder als akustisches Dämmmaterial, und wird in den Ansprüchen 1 bis 8 definiert.

In umfangreichen Versuchen wurde gefunden, dass bei Einsatz einer An- oder Durchströmung mittels heißer Luft ein emissionsarmes textiles Flächengebilde mit einer Raummasse von weniger als 100 kg/m³, bevorzugt mit einer Raummasse von 5 bis 20 kg/m³, und hohem Rückstellvermögen erzeugt werden kann. Dabei ist ein progressives Temperaturprofil zu wählen und die durchströmte Luft ist zumindest teilweise durch Frischluft zu ersetzen. Die Anforderungen der Automobilindustrie für das Interieur bezüglich Formaldehydemissionen werden erfüllt und die derzeitig gültigen Grenzwerte deutlich unterschritten.

Als Rohstoff in dem Verfahren gemäß Anspruch 1 findet ein Melaminformaldehydharz nach DE10 2006 027 760 Verwendung mit einem geringen Formaldehydanteil, nämlich mit einem M:F Verhältnis von 1:2 einer nahezu vollständigen Veretherung der Methylolgruppen mit Methanol, das heißt, es sind mindestens 80% der Methylolgruppen verethert.

Die Herstellung des Materials erfolgt wie in WO 2013/152858 A1 beschrieben. Die Erzeugung des textilen Flächengebildes erfolgt hier durch Aufschmelzen fester, mit Methanol veretherter Melamin-Formaldehyd-Harze und ein anschließendes Verspinnen über einen Meltblowprozess. Dabei wird ein von in Reihe auf einem Spinnbalken nebeneinander angeordneten Schmelzedüsen erzeugter Schmelzestrahl in mehreren Schritten zu einer Vielzahl Feinstfasern/Flocken geformt. Das aufgeschmolzene Rohmaterial wird dabei von einem Heißluftstrom mit einer Temperatur oberhalb der Schmelzetemperatur erfaßt, verwirbelt, zerfasert und in einem Ablagesystem zu einem Vliesstoff geschichtet.

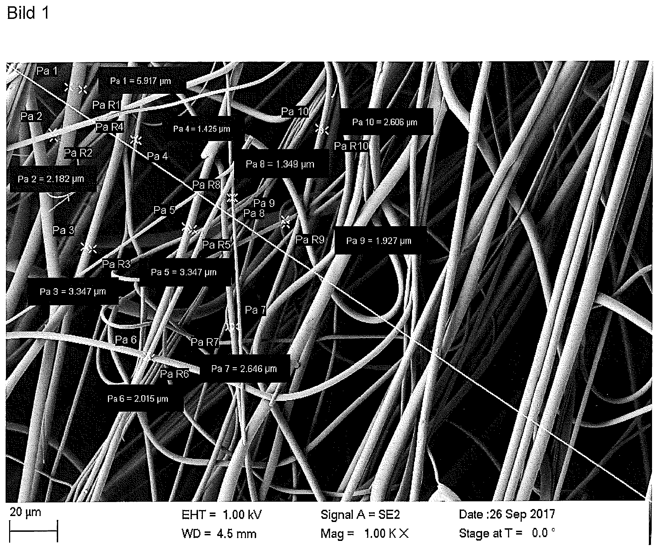

Bevorzugte Prozessbedingungen sind ein Massestrom der Schmelze je Düse zwischen 0,3 und 3,0 g/min, bevorzugt zwischen 0,85 und 1,5 g/min, eine Temperatur der Schmelze von 80 bis 200 °C, besonders bevorzugt von etwa 160 °C, eine Temperatur des Gasstroms von 130 bis 330 °C, besonders bevorzugt von etwa 310 °C. Ziel ist es, möglichst feine Strukturen mit mittleren Faserdurchmessern von weniger als 10 µm, bevorzugt von weniger als 5 µm, und einem möglichst großen Oberfläche : Volumen Verhältnis zu erhalten. Dabei arbeitet man nach Spinnverfahren, wie sie in der WO 2013/152858 bzw. der WO 2006/100041 beschrieben sind. Man erreicht Flächengebilde bestehend aus sehr feinen einzelnen Fasern und/oder Flocken wie in Bild 1 dargestellt.

Das Sammeln der erzeugten Flocken oder auch Fasern kann alternativ durch Verstellen des Winkels zwischen Düse und Ablage kleiner als 90° erfolgen, bzw. die Ablage kann eine konvexe oder konkave Oberfläche darstellen. Unterhalb der perforierten Ablage kann Luft abgesaugt werden. Nach dem Sammeln auf der Ablage ist das Vlies oder der Vliesstoff auf 40 bis 20 °C, d.h. bis auf etwa Raumtemperatur, abgekühlt.

Somit können die für Leichtbauanwendungen, als thermischer Isolator und als akustischer Dämmstoff, interessanten Raummassen von 5 bis 20 kg/m³ erreicht werden.

Anschließend wird das Vlies bzw. der Vliesstoff mit Chlorwasserstoff begast. Die Begasung erfolgt zweckmäßig in einer abgeschlossenen Kammer, vorzugsweise bei Raumtemperatur. Nach dem Einwirken des Chlorwasserstoffs ist die Reaktivität des Materials deutlich erhöht. In einem weiteren Prozessschritt wird das Vlies oder der Vliesstoff einer thermischen Behandlung unterzogen. Dazu wird die Temperatur kontinuierlich oder graduell auf 260 bis 340 °C, bevorzugt auf 260 bis 320 °C, erhöht. Dabei darf die Temperatur im Bereich bis 160°C zur Stabilisierung der Struktur nur um maximal 20°C/min erhöht werden. Nach dem Erreichen der 160°C kann der Temperaturanstieg auf 100 °C/min erhöht werden. Anschließend wird das Vlies oder der Vliesstoff bei der erreichten Temperatur von bis 340°C gehalten für 5 zu 90 min, bevorzugt für 10 bis 60 min. Bei der gesamten thermischen Behandlung wird das Material mit heißer Luft durchströmt oder angeströmt um den Wärmeübergang zu verbessern. Während des Vorgangs ist ein Teil von 5 bis 50% der Konvektionsluft durch Frischluft zu ersetzen.

Nach Abschluss der thermischen Behandlung erfolgt eine forcierte schnelle thermische Abkühlung des heißen Materials auf 30 bis 60°C, bevorzugt 30 bis 40 °C, innerhalb von 5 s und höchstens 3 min, bevorzugt innerhalb von 20 s bis 2 min, durch Kontakt mit zum schnellen Wärmeaustausch geeigneten Material, zum Beispiel Ablage auf einem Metallband und mittels Durchströmung mit kalter Luft einer Temperatur von 0 °C bis 40 °C.

Das Endprodukt ist durch eine Flächenmasse im Bereich von 20 bis 600 g/m² bei einer Materialdicke bis 40 mm charakterisiert. Die resultierenden geringen Raummassen und die Voluminösität verleihen dem Endprodukt besondere akustische und thermische Eigenschaften. Das nach dem beschriebenen Verfahren hergestellte hitze- und flammfeste Vlies bzw. der Vliesstoff gemäß den Ansprüchen 2 bis 7 ist Teil der vorliegenden Erfindung.

Es ergeben sich in Abhängigkeit von Flächenmasse, Faserfeinheit, Dicke, Verdichtungsgrad und Nachbehandlung geringe Wärmeleitfähigkeitswerte (nach DIN EN ISO 8302) von 0,028 W/(m*K) bis 0,030 W/(m*K).

Zudem kann durch die Vliesstruktur und die besonders feinen Fasern ein akustisch effektiv isolierendes Vlies geschaffen werden. Beispielhaft sind die akustischen Eigenschaften (nach DIN ISO 10534-2; Probekörper Durchmesser: 30 mm) in folgenden Tabellen aufgeführt:

### Beispiel 1: Melaminharz-Spinnvlies 03/16-2T

(Flächenmasse: 400 g/m²; mittlerer Faserdurchmesser: 3,8 µm; Dicke: 19,3 mm)

| MER 03-16-2 T OS | Absorption |
|---|---|
| Frequenz[Hz] | Absorption |
| 1000 | 0,454 |
| 1250 | 0,586 |
| 1600 | 0,721 |
| 2000 | 0,84 |
| 2500 | 0,922 |
| 3150 | 0,971 |
| 4000 | 0,989 |
| 5000 | 0,984 |

### Beispiel 2: Melaminharz-Spinnvlies 26/16-1T

(Flächenmasse: 300 g/m²; mittlerer Faserdurchmesser: 3,0 µm; Dicke: 15,3 mm)

| MER 26-16-1 T OS | Absorption |
|---|---|
| Frequenz [Hz] | Absorption |
| 1000 | 0,224 |
| 1250 | 0,331 |
| 1600 | 0,473 |
| 2000 | 0,621 |
| 2500 | 0,757 |
| 3150 | 0,874 |
| 4000 | 0,952 |
| 5000 | 0,99 |

Zum Erreichen der geringen Formaldehyd-Emissionen im Produkt ist die Kombination der folgenden Bausteine notwendig:
- Verwendung eines formaldehydarmen Ausgangsharzes.
- Ausspinnen möglichst feiner Strukturen mit Faserdurchmessern unter 10 µm, bevorzugt <5 µm, und einem möglichst großen Oberfläche: Volumen Verhältnis.
- Verwendung hoher Schmelze- und Blaslufttemperaturen um beim Spinnprozess bereits durch die einsetzende Polykondensationsreaktion einen Teil des Formaldehyds zu entfernen.
- Anschließend eine thermische Behandlung, bei der das Material beispielsweise angeströmt oder durchströmt wird um den Wärmeübergang zu erhöhen. Der Volumenstrom muss dabei von hoher Gleichmäßigkeit sein. Es erfolgt dabei ein teilweiser Luftaustausch der Konvektionsluft durch Frischluft.

Die erhaltenen Melaminformaldehyd-Vliesstoffe wurden zur Bestimmung der Formaldehydemissionen folgenden Prüfungen unterzogen:
- DIN EN ISO 14184-1 Textilien - Bestimmung des Gehaltes an Formaldehyd - Teil 1: Freier und hydrolysierter Formaldehydgehalt (Wasser-ExtraktionsVerfahren)
- VDA 275 Bestimmung der Formaldehydabgabe. Formteile für den Fahrzeuginnenraum - Bestimmung der Formaldehydabgabe Der Grenzwert liegt zurzeit bei <10 mg/kg

Diese Testmethoden unterscheiden sich grundlegend in der Beanspruchung des Materials und in Ihrer Durchführung.

Die Bestimmung des freisetzbaren Formaldehyds erfolgt bei DIN EN ISO 14184-1 bei einer Temperatur von 40°C im wässrigen Medium.

Bei einer Prüfanordnung nach VDA 275 wird der Probekörper über Wasser für drei Stunden bei 60°C gelagert, die Emissionen gesammelt und anschließend quantitativ analysiert. Bei allen Produkten auf Basis duromerer Formaldehyd-Verbindungen kommt es zur Emission von Formaldehyd, da es sich bei Formaldehyd um einen bzw. den Hauptbestandteil des Materials handelt.

Viele Tests werden jedoch im Bereich der Raum- und Körpertemperaturen durchgeführt, da es sich hierbei um klassische Einsatztemperaturen vieler Werkstoffe und Bauteile handelt.

Die Formaldehydemission steigt mit zunehmender Temperatur und Luftfeuchtigkeit. Die Emissionswerte hängen in exponentieller Weise von der Prüftemperatur ab. Dieser Zusammenhang ist annäherungsweise mit der empirischen Arrhenius-Gleichung beschreibbar.

Bei den nach dem oben beschriebenen Verfahren hergestellten emissionsarme Melamin/Formaldehyd-Vliesstoffen werden folgende Werte erreicht:
- DIN EN ISO 14184-1: Grenzwert von <16 mg/kg wird unterschritten.
- VDA 275: 3,6 mg/kg
- VDA 277: 28 µgC/g
- VDA 278: <1 mg/kg VOC; <1 mg/kg FOG
- DIN 75201-B: 0 mg
- Japan Law 112: <16 mg/kg, erfüllt die Anforderungen für Ökotex Klasse 1

Verwendung findet das so hergestellte Flächengebilde vorzugsweise als thermischer Isolator und als akustisches Dämmmaterial, insbesondere für Leichtbauanwendungen sowie im Fahrzeugbau und Transportwesen.

## Patentansprüche

1. Verfahren zur Herstellung von hitze- und flammfesten, emissionsarmen Vliesen oder Vliesstoffen auf Melamin/Formaldehydbasis mit den Stufen:
a) Bereitstellen eines Melamin/Formaldehyd-Harzes mit einem M : F Verhältnis von 1:2 und einer nahezu vollständigen Veretherung der Methylolgruppen mit Methanol, bei der mindestens 80 % der Methylolgruppen verethert sind;
b) Ausspinnen eines Massestroms der Schmelze je Düse zwischen 0,3 und 3,0 g/min bei einer Temperatur der Schmelze zwischen 80 und 200 °C in einem Meltblowprozess;
c) Anströmen des Massestroms der ausgesponnenen Schmelze mit einem Gasstrom einer Temperatur von 130 bis 330 °C;
d) Ablegen der in Stufe c) gebildeten Fasern und/oder Flocken zu einem Vlies oder Vliesstoff, dabei Abkühlen auf 40 bis 20 °C;
e) Behandeln des Vlieses oder Vliesstoffs mit gasförmigem Chlorwasserstoff;
f) Erhitzen des in Stufe e) erhaltenen Vlieses oder Vliesstoffs auf 260 bis 340 °C, wobei es mit Luft angeströmt oder durchströmt wird und wobei die Temperatur im Bereich bis zu 160°C um maximal 20°C/min erhöht wird, danach um bis zu 100 °C/min;
g) Halten des Vlieses oder Vliesstoffs bei der in Stufe f) erreichten Temperatur von 260 bis 340 °C für 5 bis 90 min, wobei ein Teil von 5 bis 50 % der Konvektionsluft durch Frischluft ausgetauscht wird; und
h) Abkühlen des Vlieses oder Vliesstoffs innerhalb von 5 s bis 3 min auf 30 bis 60°C durch Kontakt mit zum schnellen Wärmeaustausch geeignetem Material.

2. Hitze- und flammfeste Vliese oder Vliesstoffe auf Melamin/Formaldehydbasis, erhältlich nach Anspruch 1.

3. Vliese oder Vliesstoffe nach Anspruch 2, **dadurch gekennzeichnet, dass** sie eine Formaldehydemission von unter 10 mg/kg gemessen nach VDA 275 aufweisen..

4. Vliese oder Vliesstoffe nach Anspruch 2 oder 3, **dadurch gekennzeichnet, dass** sie eine Raummasse von weniger als 100 kg/m³, bevorzugt von 5 bis 20 kg/m³, aufweisen.

5. Vliese oder Vliesstoffe nach Anspruch 4, **dadurch gekennzeichnet, dass** der mittlere Durchmesser der Fasern weniger als 10µm, bevorzugt weniger als 5 µm, beträgt.

6. Vliese oder Vliesstoffe nach Anspruch 2 oder 3, **dadurch gekennzeichnet, dass** sie Wärmeleitfähigkeitswerte von 0,028 bis 0,030 W/(m*K) erreichen, gemessen nach DIN EN ISO 8302.

7. Vliese oder Vliesstoffe nach Anspruch 2 oder 3, **dadurch gekennzeichnet, dass** sie eine akustische Absorption von 0,84 bei 2000 Hz erreichen, gemessen nach DIN ISO 10534-2 an einem Melaminharz-Spinnvlies mit einer Flächenmasse von 400 g/m², einem Probekörper-Durchmesser von 30 mm, einem mittleren Faserdurchmesser von 3,8 µm und einer Dicke von 19,3 mm, oder eine akustische Absorption von 0,621 erreichen, gemessen nach DIN ISO 10534-2 an einem Melaminharz-Spinnvlies mit einer Flächenmasse von 300 g/m², einem Probekörper-Durchmesser von 30 mm, einem mittleren Faserdurchmesser von 3,0 µm und einer Dicke von 15,3 mm.

8. Verwendung der Vliese oder Vliesstoffe nach einem der Ansprüche 2 bis 7 als thermischer Isolator oder als akustisches Dämmmaterial.

## Claims

1. Process for the production of heat- and flame-resistant, low-emission nonwovens or nonwoven fabrics based on melamine/formaldehyde, with the following stages:
a) provision of a melamine/formaldehyde resin with M:F ratio 1:2 and with almost complete etherification of the methylol groups with methanol, at least 80 % of the methylol groups being etherified;
b) spinning of the melt at a mass flow rate of from 0.3 to 3.0 g/min per die at a melt temperature of from 80 to 200 °C in a melt-blow process;
c) causing of a gas stream at a temperature of from 130 to 330 °C to flow onto the spun melt stream;
d) laying of the flocs and/or fibres formed in stage c) to give a nonwoven or nonwoven fabric, with cooling to from 40 to 20 °C;
e) treatment of the nonwoven or nonwoven fabric with gaseous hydrogen chloride;
f) heating of the nonwoven or nonwoven fabric obtained in stage e) to from 260 to 340 °C, where air is caused to flow onto or through said nonwoven, and where the temperature in the range up to 160 °C is increased by at most 20 °C/min, and thereafter is increased by up to 100 °C/min;
g) keeping of the nonwoven or nonwoven fabric for from 5 to 90 min at the temperature of from 260 to 340 °C reached in stage f), with from 5 to 50 % of the convection air being replaced by fresh air; and
h) cooling of the nonwoven or nonwoven fabric to from 30 to 60 °C within from 5 s to 3 min by contact with material suitable for rapid heat exchange.

2. Heat- and flame-resistant nonwovens or nonwoven fabrics based on melamine/formaldehyde and obtainable according to Claim 1.

3. Nonwovens or nonwoven fabrics according to Claim 2, **characterized in that** their formaldehyde emission is less than 10 mg/kg when measured in accordance with VDA 275.

4. Nonwovens or nonwoven fabrics according to Claim 2 or 3, **characterized in that** their density is less than 100 kg/m³, preferably from 5 to 20 kg/m³.

5. Nonwovens or nonwoven fabrics according to Claim 4, **characterized in that** the average diameter of the fibres is less than 10 µm, preferably less than 5 µm.

6. Nonwovens or nonwoven fabrics according to Claim 2 or 3, **characterized in that** they achieve thermal conductivity values of from 0.028 to 0.030 W/(m*K) when measured in accordance with DIN EN ISO 8302.

7. Nonwovens or nonwoven fabrics according to Claim 2 or 3, **characterized in that** they achieve acoustic absorption of 0.84 at 2000 Hz when measured in accordance with DIN ISO 10534-2 on a spunbonded melamine resin nonwoven having a mass per unit area of 400 g/m², a test sample diameter of 30 mm, an average fibre diameter of 3.8 µm and a thickness of 19.3 mm, or achieve acoustic absorption of 0.621 when measured in accordance with DIN ISO 10534-2 on a spunbonded melamine resin nonwoven having a mass per unit area of 300 g/m², a test sample diameter of 30 mm, an average fibre diameter of 3.0 µm and a thickness of 15.3 mm.

8. Use of the nonwovens or nonwoven fabrics according to any of Claims 2 to 7 as thermal insulator or as acoustic insulation material.

## Revendications

1. Procédé de fabrication de non-tissés ou de tissus non-tissés à base de mélamine/formaldéhyde résistants à la chaleur et aux flammes, à faibles émissions, comprenant les étapes consistant à :
a) fournir une résine de mélamine/formaldéhyde présentant un rapport M:F de 1:2 et une éthérification presque complète des groupes méthylol avec du méthanol, dans laquelle au moins 80 % des groupes méthylol sont éthérifiés ;
b) filer un flux massique de la masse en fusion par buse entre 0,3 et 3,0 g/min à une température de la masse en fusion comprise entre 80 et 200°C dans un processus de fusion-soufflage ;
c) insuffler dans le flux massique de la matière en fusion filée un flux de gaz à une température comprise entre 130 et 330°C ;
d) placer les fibres et/ou flocons formé(e)s à l'étape c) sur un non-tissé ou un tissu non-tissé, puis refroidir de 40 à 20°C ;
e) traiter le non-tissé ou le tissu non-tissé avec du chlorure d'hydrogène gazeux ;
f) chauffer le non-tissé ou le tissu non-tissé obtenu à l'étape e) entre 260 et 340°C, dans lequel il est insufflé ou traversé d'air circulant et dans lequel la température est augmentée dans la plage allant jusqu'à 160°C, à un maximum de 20°C/min, puis jusqu'à 100°C/min ;
g) maintenir le non-tissé ou le tissu non-tissé à la température comprise entre 260 et 340°C atteinte à l'étape f) pendant 5 à 90 minutes, dans lequel une partie de 5 à 50 % de l'air de convection est remplacée par de l'air frais ; et
h) refroidir le non-tissé ou le tissu non-tissé de 5 s à 3 min entre 30 et 60°C par contact avec un matériau adapté à un échange thermique rapide.

2. Non-tissés ou tissus non-tissés résistants à la chaleur et aux flammes à base de mélamine/formaldéhyde, pouvant être obtenus selon la revendication 1.

3. Non-tissés ou tissus non-tissés selon la revendication 2, **caractérisés en ce qu'**ils présentent une émission de formaldéhyde inférieure à 10 mg/kg mesurée selon VDA 275.

4. Non-tissés ou tissus non-tissés selon la revendication 2 ou 3, **caractérisés en ce qu'** ils présentent une masse volumique inférieure à 100 kg/m³, de préférence de 5 à 20 kg/m³.

5. Non-tissés ou tissus non-tissés selon la revendication 4, **caractérisés en ce que** le diamètre moyen des fibres est inférieur à 10 µm, de préférence inférieur à 5 µm.

6. Non-tissés ou tissus non-tissés selon la revendication 2 ou 3, **caractérisés en ce qu'**ils atteignent des valeurs de conductivité thermique de 0,028 à 0,030 W/(m^{∗}K), mesurées selon DIN EN ISO 8302.

7. Non-tissés ou tissus non-tissés selon la revendication 2 ou 3, **caractérisés en ce qu'**ils atteignent une absorption acoustique de 0,84 à 2 000 Hz, mesurée selon DIN ISO 10534-2 sur un non-tissé filé-lié de résine de mélamine avec un grammage de 400 g/m², un diamètre d'échantillon de 30 mm, un diamètre moyen de fibre de 3,8 µm et une épaisseur de 19,3 mm, ou une absorption acoustique de 0,621, mesurée selon DIN ISO 10534-2 sur un non-tissé filé-lié de résine de mélamine avec un grammage de 300 g/m², un diamètre d'échantillon de 30 mm, un diamètre moyen de fibre de 3,0 µm et une épaisseur de 15,3 mm.

8. Utilisation des non-tissés ou tissus non-tissés selon l'une quelconque des revendications 2 à 7 en tant qu'isolant thermique ou en tant que matériau d'isolation acoustique.
